# EUROPÄISCHE PATENTSCHRIFT

(11) **EP 3 814 262 B1**
(45) Veröffentlichungstag und Bekanntmachung des Hinweises auf die Patenterteilung: **31.07.2024**
(21) Anmeldenummer: 19732047.6
(22) Anmeldetag: 25.06.2019
(51) Int. Cl.: B66B 1/46, B66B 1/34, G06K 7/00, G06K 7/10, G07C 9/00

(54) **DATENERFASSUNGSEINRICHTUNG FÜR EINE AUFZUGSANLAGE UND EIN GEBÄUDEZUGANGSKONTROLLSYSTEM**
DATA CAPTURE DEVICE FOR AN ELEVATOR SYSTEM AND A BUILDING ACCESS CONTROL SYSTEM
DISPOSITIF D'ACQUISITION DE DONNÉES POUR UN SYSTÈME D'ASCENSEUR ET UN SYSTÈME DE CONTRÔLE D'ACCÈS À UN BÂTIMENT

(30) Priorität: 27.06.2018 EP 18180194
(43) Veröffentlichungstag der Anmeldung: 05.05.2021
(73) Patentinhaber: INVENTIO AG, 6052 Hergiswil (CH)
(72) Erfinder: FRIEDLI, Tobias, 5400 Baden (CH)
(74) Vertreter: Inventio AG
(86) Internationale Anmeldenummer: PCT/EP2019/066730
(87) Internationale Veröffentlichungsnummer: WO 2020/002268

(56) Entgegenhaltungen:
- EP-A1- 3 070 039
- WO-A1-2016/198548
- US-A1- 2008 180 215
- US-A1- 2015 244 063
- INVENTIO AG: "Factsheet PORT 1 wide", 7 March 2018 (2018-03-07), XP055537248, Retrieved from the Internet <URL:https://www.theporttechnology.com/page/downloads.html> [retrieved on 20181220]

## Beschreibung

Die hier beschriebene Technologie betrifft allgemein eine Datenerfassungseinrichtung.

Ausführungsbeispiele der Technologie betreffen insbesondere eine Datenerfassungseinrichtung, die Daten von einem einem Nutzer zugeordneten Informationsträger erfasst, und ein Gebäudesystem mit einer solchen Datenerfassungseinrichtung.

Ein bekanntes Gebäudesystem ist eine Aufzugsanlage, ein anderes bekanntes Gebäudesystem ist ein Zugangskontrollsystem. In einem Gebäude mit einer Aufzugsanlage sind auf den einzelnen Stockwerken Datenerfassungseinrichtungen angeordnet, mit denen ein Nutzer einen Aufzug rufen kann, beispielsweise durch Eingabe eines Zielstockwerks. Bei einem Zugangskontrollsystem können Datenerfassungseinrichtungen an einem Gebäudezugang, z. B. an einer Aussenwand des Gebäudes, und/oder an einem Zugang zu einer zugangsbeschränkten Zone innerhalb eines Gebäudes angeordnet sein, um dort einen Berechtigungsnachweis vorzuweisen. Die bei einer Aufzugsanlage auf den Stockwerken angeordneten Datenerfassungseinrichtungen haben für die Eingabe des Zielstockwerks jeweils entweder eine Tastatur, einen berührungsempfindlichen Bildschirm und/oder eine Leseeinrichtung (z. B. in Form eines aus EP 0699617 B1 bekannten RFID Kartenlesers, eines aus EP 2238067 bekannten (Bluetooth) Funkmoduls oder einer aus WO 2015049186 A1 bekannten Leseeinrichtung für einen optischen Code. Diese Leseeinrichtungen können auch in Verbindung mit einem (physischen) Zugangskontrollsystem verwendet werden, wie es beispielsweise in WO 2015049186 A1 beschrieben ist.

EP 3070039 A1 offenbart eine Datenerfassungseinrichtung für eine Aufzugsanlage.

Die Datenerfassungseinrichtung umfasst eine Anzeigeeinrichtung, ein Lesegerät und eine Steuereinrichtung, die mit der Anzeigeeinrichtung und dem Lesegerät kommunikativ verbunden ist. Das Lesegerät ist mit verschiedenen Technologien kompatibel und dazu ausgelegt, Information von einem Informationsträger optisch zu erfassen und Information von einem Informationsträger mittels Funkkommunikation zu erfassen.

US 2015/244063 A1 offenbart eine tragbare Einrichtung für Funkkommunikation mit einer leitfähigen Abdeckung, die eine nicht leitfähige Öffnung hat. Die Öffnung befindet sich gegenüber einer Anzeigevorrichtung auf der Rückseite der tragbaren Einrichtung für Funkkommunikation, wobei eine Antenne zumindest teilweise innerhalb des Umfangs der Öffnung angeordnet ist. Durch die Öffnung kann ein Kameramodul ein Bild aufnehmen. Das Kameramodul kann in der Öffnung angeordnet sein US 2008/180215 A1 offenbart eine Antenne zur Verwendung in Verbindung mit einem kombinierten RFID-Lesegerät und einem optischen Bildwandler. Die Antenne ist eine auf einem Substrat implementierte Rahmenantenne, und das Substrat hat ein Loch für den optischen Bildwandler.

WO 2016/198548 A1 offenbart ein Aufzugssystem mit prädiktiver Ruferzeugung.

Aufzugsanlagen und/oder Zugangskontrollsysteme werden üblicherweise in Gebäuden mit mehreren, evtl. einer grossen Anzahl von Stockwerken und entsprechend hohem Verkehrsaufkommen eingesetzt. Der Verkehr kann nicht nur Nutzer umfassen, die mit dem Gebäude und damit mit den darin installierten Datenerfassungseinrichtungen vertraut sind, sondern auch Nutzer, die das Gebäude erstmalig oder nur gelegentlich betreten und damit mit den Datenerfassungseinrichtungen nicht vertraut sind. Es besteht daher ein Bedarf an einer Technologie, die es erlaubt, eine nutzerfreundliche

Datenerfassungseinrichtung von geringer technischer Komplexität zu schaffen.

Ein Aspekt betrifft eine Datenerfassungseinrichtung für ein Gebäudesystem. Die Datenerfassungseinrichtung umfasst ein Gehäuse, das auf einem Stockwerk eines Gebäudes oder an einem Zugang zu einem zugangsbeschränkten Bereich anordenbar ist, wobei das Gebäude das Gebäudesystem umfasst. Die Datenerfassungseinrichtung umfasst eine im Gehäuse angeordnete Anzeigeeinrichtung, ein im Gehäuse angeordnetes optisches Lesegerät, ein im Gehäuse angeordnetes erstes Lesegerät und eine im Gehäuse angeordnete Steuereinrichtung. Die Steuereinrichtung ist kommunikativ mit der Anzeigeeinrichtung, dem optischen Lesegerät und dem ersten Lesegerät verbunden. Das optische Lesegerät ist ausgestaltet, um Information von einem ersten Informationsträger optisch zu erfassen, und so angeordnet, dass durch einen Bildsensor des optischen Lesegeräts Licht aus Richtung einer Vorderseite des Gehäuses empfangbar ist, die für einen Nutzer zugänglich ist. Das erste Lesegerät hat eine erste Antenne, um Information von einem zweiten Informationsträger mittels Funkkommunikation zu erfassen. Die erste Antenne umfasst eine Luftspule, die einen Innenraum aufweist. Der Bildsensor des optischen Lesegeräts ist ganz oder teilweise im Innenraum der Luftspule angeordnet.

Durch die hier beschriebene Technologie wird eine nutzerfreundliche Datenerfassungseinrichtung geschaffen, die Nutzer intuitiv bedienen können und zwar unabhängig davon, welche Art von Informationsträger (z. B. einen mit einem darauf dargestellten optischen Code oder einen, der auf der RFID Technologie basiert) ein Nutzer benutzt. Die Nutzerfreundlichkeit wird beispielsweise dadurch erreicht, dass der Bildsensor innerhalb der Luftspule angeordnet ist, so dass sowohl das optische Erfassen als auch das Erfassen durch Funkkommunikation innerhalb eines festgelegten Bereichs der Datenerfassungseinrichtung erfolgt. Die Nutzer können die Informationsträger im Wesentlichen an der gleichen Stelle der Datenerfassungseinrichtung vorweisen. Dies ist insbesondere für solche Nutzer von Vorteil, die mit der Bedienung einer Datenerfassungseinrichtung nicht vertraut sind, beispielsweise weil sie das Gebäude erstmalig oder nur gelegentlich betreten.

Durch die Anordnung des Bildsensors im Innenraum der Luftspule wird zudem der in der Datenerfassungseinrichtung vorhandene Raum besser ausgenutzt. Eine solche Optimierung der Raumnutzung ist von Vorteil, wenn die Datenerfassungseinrichtung zum Beispiel Beschränkungen hinsichtlich Grösse, Form oder Volumen unterliegt. Die Anordnung des ersten Lesegeräts und des optischen Lesegeräts, einschliesslich der dazugehörigen Steuereinrichtungen, kann z. B. dahingehend optimiert werden, dass diese möglichst kompakt und auf möglichst kleinen Raum angeordnet werden können und somit in relativ kleinen Gehäusen untergebracht werden können. Daraus ergibt sich als ein Vorteil, dass eine für kleine Gehäuse optimierte Anordnung auch in grösseren Gehäusen untergebracht werden kann; u. a. kann somit die Datenerfassungseinrichtung, insbesondere das Design des Gehäuses, kostengünstig und flexibel für eine bestimmte Verwendung angepasst werden.

Weil eine Datenerfassungseinrichtung gemäss der hier beschriebenen Technologie für unterschiedliche Arten von Informationsträger nutzbar ist, können die Nutzer die Art von Informationsträger flexibel wählen. Ein im Gebäude angesiedeltes Unternehmen kann z. B. für seine Mitarbeiter als Informationsträge mobile elektronische Kommunikationseinheiten (z. B. Smartphones) wählen, die zur Darstellung eines optischen Codes vorgesehen sind, während ein anderes Unternehmen oder private Einzelpersonen auf einer RFID Technologie basierende (u. U. kostengünstigere) Transponderkarten als Informationsträger wählen können.

Ein weiterer Aspekt der hier beschriebenen Technologie betrifft ein Gebäudesystem mit mindestens einer Datenerfassungseinrichtung. In einem Ausführungsbeispiel ist die mindestens eine Datenerfassungseinrichtung zur Eingabe eines Aufzugsrufs auf einem Stockwerk des Gebäudes angeordnet; eine solche Datenerfassungseinrichtung ist in einem Ausführungsbeispiel ein Teil einer Aufzugsanlage. In einem anderen Ausführungsbeispiel ist die mindestens eine Datenerfassungseinrichtung an einem Zugang zu einem zugangsbeschränkten Bereich angeordnet; eine solche Datenerfassungseinrichtung ist in einem Ausführungsbeispiel ein Teil eines Zugangskontrollsystems. Der Zugang kann beispielsweise eine Gebäudeaussen- und/oder eine Gebäudeinnentür, oder eine andere Art mit oder ohne physische Barriere, umfassen. In einem Ausführungsbeispiel kann das Gebäudesystem eine Kombination aus einer Aufzugsanlage und einem Zugangskontrollsystem umfassen. Dabei ist es ein Vorteil, dass die Datenerfassungseinrichtung auch in einem solchen Gebäudesystem anwendbar ist.

Die in Verbindung mit einer hier beschriebenen Datenerfassungseinrichtung verwendeten Informationsträger stellen eine Art Berechtigungsnachweis dar. Die Informationsträger speichern Daten, beispielsweise in einer Speichereinrichtung (z. B. einem Speicherchip) und/oder codiert als optischer Code, die beispielsweise dazu dienen können, einen Nutzer zu identifizieren. Kann der Nutzer identifiziert werden, gilt er als berechtigt, das Gebäude und/oder bestimmte Bereiche oder Einrichtungen im Gebäude zu nutzen. Einem nicht identifizierbaren Nutzer bleibt diese Nutzung verwehrt.

Die genannte intuitive Bedienung der Datenerfassungseinrichtung wird in einem Ausführungsbeispiel dadurch unterstützt, dass ein Markierungselement an der Vorderseite des Gehäuses für einen Nutzer sichtbar vorhanden ist. Das Markierungselement markiert einen Bereich, in dem die Luftspule und der in ihrem Innenraum angeordnete Bildsensor angeordnet sind, d. h. es ist die Stelle markiert, an der ein Informationsträger vorzuweisen ist. Bei der Gestaltung des Markierungselements besteht hohe Flexibilität hinsichtlich Material, Design und Funktionalität (z. B. Ausgestaltung als aktives oder passives Element). In einem Ausführungsbeispiel umfasst das Markierungselement eine farblich gekennzeichnete kreisförmige Markierung. Anstelle einer kreisförmigen Markierung kann auch eine davon abweichende Form als Markierung verwendet werden. Die farbliche Kennzeichnung kann beispielsweise ein weisser Kreis auf einer dunklen Glasoberfläche sein; der Kreis kann beleuchtet (aktiv) oder unbeleuchtet (passiv) sein.

In einem Ausführungsbeispiel ist die Vorderseite des Gehäuses im durch das Markierungselement markierten Bereich für vom Bildsensor zu detektierendes Licht durchlässig. Bei der Gestaltung des markierten Bereichs sind verschiedene Optionen möglich; der markierte Bereich kann ein für das zu detektierende Licht transparentes Material (z. B. Glas oder Kunststoff) oder einen materiefreien Durchbruch (z. B. ein Loch) umfassen. Der markierte Bereich ermöglicht ausserdem die Erfassung der Information mittels Funkkommunikation; d. h. das Gehäuse ist mindestens im markierten Bereich durchlässig für sich bei der Funkkommunikation ausbreitende elektromagnetische Wellen.

Die intuitive Bedienung der Datenerfassungseinrichtung wird in einem Ausführungsbeispiel dadurch unterstützt, dass im Gehäuse eine Lichtquelle angeordnet ist, durch die das Markierungselement beleuchtbar ist. Die Lichtquelle kann beispielsweise eine Innenseite der Vorderseite des Gehäuses beleuchten, so dass sich der markierte Bereich vom übrigen Teil der Vorderseite farblich absetzt. Die Lichtquelle kann eine oder mehrere Leuchtdioden (LED) umfassen; LEDs haben eine geringe elektrische Leistungsaufnahme, erzeugen wenig Verlustwärme und erlauben hohe Flexibilität hinsichtlich der Farbwahl. Dadurch kann der markierte Bereich auch in einem Bereitschaftsmodus für Nutzer (u. a. auch bei schlechten Lichtverhältnissen) kenntlich gemacht werden, ohne mit einer erhöhten Energieaufnahme der Datenerfassungseinrichtung einher zu gehen. Derartige Lichtquellen reduzieren auch die Komplexität der Datenerfassungseinrichtung und bieten hinsichtlich Grösse und Form der Datenerfassungseinrichtung einen grossen Gestaltungsspielraum.

In einem Ausführungsbeispiel weist das Markierungselement eine im Gehäuse angeordnete Lichtquelle auf. In diesem Beispiel ist die Lichtquelle ein Teil des Markierungselements. In einem Ausführungsbeispiel ist die Lichtquelle in einem Diffusor integriert, oder sie speist Licht in diesen ein. Damit kann beispielsweise eine gleichmässige Lichtverteilung und damit eine gute Ausleuchtung des Markierungselements erreicht werden. Das Markierungselement kann beispielsweise so gestaltet werden, dass auf der Vorderseite des Gehäuses ein weisser oder farbig erscheinender Ring sichtbar ist. In einem Ausführungsbeispiel ist der Diffusor ringförmig gewählt. Der Fachmann erkennt, dass der Diffusor auch eine andere Form aufweisen kann.

Die Datenerfassungseinrichtung hat in einem Ausführungsbeispiel ein Trägerelement, auf dem das optische Lesegerät und das erste Lesegerät angeordnet sind. Das Trägerelement hat einen Durchbruch, durch den eine Passage zwischen einer ersten Seite und einer zweiten Seite des Trägerelements geschaffen ist. Die Luftspule umrandet den Durchbruch. Der Bildsensor des optischen Lesegeräts kann so angeordnet sein, dass er nicht in den Durchbruch hineinragt; er kann aber auch teilweise in den Durchbruch hineinragen, oder sich durch den Durchbruch hindurch erstrecken. Dadurch kann eine kompakte Anordnung des Bildsensors und der Luftspule auf dem Trägerelement geschaffen werden, weil beispielsweise beide Seiten des Trägerelements und die dort vorhandenen Räume zur Befestigung und Kontaktierung des Bildsensors und der Luftspule verwendet werden können.

Das optische Lesegerät umfasst in einem Ausführungsbeispiel eine Digitalkamera, die den Bildsensor umfasst. Eine solche Digitalkamera ist in kompakter Bauweise erhältlich und kann, mit oder ohne Sockel, so auf dem Trägerelement angeordnet werden, dass sie ganz oder teilweise im Innenraum der Luftspule angeordnet ist.

In einem Ausführungsbeispiel ist das erste Lesegerät in Verbindung mit der ersten Antenne beispielsweise für eine Funkkommunikation in einem Frequenzbereich von ca. 100 kHz - 200 kHz, insbesondere für eine Frequenz von ca. 125 kHz oder ca. 134 kHz ausgestaltet. Entsprechend dazu kann im Gebäude die Technologie für bekannte Transponder verwendet werden.

Die Datenerfassungseinrichtung hat in einem Ausführungsbeispiel ein zweites Lesegerät und eine zweite Antenne, die für eine Funkkommunikation in einem zweiten Frequenzbereich ausgestaltet sind, beispielsweise für eine Funkkommunikation in einem Frequenzbereich von ca. 4 MHz - ca. 20 MHz, insbesondere für eine Frequenz von ca. 13,56 MHz, ausgestaltet. Auch für diesen Frequenzbereich kann im Gebäude die Technologie für bekannte Transponder verwendet werden. In einem Ausführungsbeispiel ist die zweite Antenne platzsparend in das Trägerelement integriert.

In einer weiteren Ausführung hat die Datenerfassungseinrichtung einen Funktransceiver für eine Kommunikation mit einer Kommunikationseinrichtung eines Nutzers, wobei der Funktransceiver mit der Steuereinrichtung verbunden ist. Der Funktransceiver ist beispielsweise für eine Kommunikation gemäss einem Bluetooth Standard ausgestaltet. Die Kommunikationseinrichtung kann z. B. ein Mobiltelefon, ein Smartphone oder ein Tablet PC sein, die Nutzer bereits häufig bei sich tragen. Eine solche Kommunikationseinrichtung hat in vielen Fällen ein Funkmodul, das für eine Kommunikation gemäss einem Bluetooth Standard ausgestaltet ist.

In einem Ausführungsbeispiel umfasst die Datenerfassungseinrichtung eine Eingabeeinrichtung mit einer Tastatur oder einer berührungsempfindlichen Oberfläche (z. B. einen Touchscreen). Ein Touchscreen ist wartungsarm, da er ohne mechanisch bewegliche Komponenten auskommt, leicht zu reinigen, was vor allem bei Komponenten, die von vielen Personen berührt werden, wichtig ist, und relativ kostengünstig. Mit Hilfe dieser Eingabeeinrichtung kann ein Aufzugsruf und/oder ein Berechtigungsnachweis (z. B. eine persönliche Identifikationsnummer (PIN)) von einem Nutzer manuell eingegeben werden. Diese Möglichkeit zur Bedienung der Datenerfassungseinrichtung kann beispielsweise von Nutzern genutzt werden, die keinen der oben genannten Informationsträger besitzen (z. B. weil sie einmalige oder nur gelegentliche Besucher sind) oder ihren jeweiligen Informationsträger momentan nicht dabei haben.

Wie oben erwähnt, bietet die hier beschriebene Technologie den Nutzern Flexibilität bezüglich der Art der Informationsträger, sie können z. B. zwischen einem RFID Transponder und einem Träger (z. B. Kunststoff, Papier oder mobiles Kommunikationsgerät), auf dem ein optischer Code dargestellt ist, wählen. Durch das zweite Lesegerät in Verbindung mit der zweiten Antenne ist eine weitere Wahlmöglichkeit gegeben. Mit einem Funktransceiver ausgestattet (z. B. gemäss einer Bluetooth Technologie) bietet die Datenerfassungseinrichtung gemäss der hier beschriebenen Technologie eine zusätzliche Option für die Wahl des Informationsträgers. Unabhängig von diesen Informationsträgern bietet die Datenerfassungseinrichtung auch die Option der manuellen Dateneingabe. Durch die hier beschriebene Technologie wird somit auch eine multioptionale Datenerfassungseinrichtung geschaffen.

Im Folgenden sind verschiedene Aspekte der verbesserten Technologie anhand von Ausführungsbeispielen in Verbindung mit den Figuren näher erläutert. In den Figuren haben gleiche Elemente gleiche Bezugszeichen. Es zeigen:
- Fig. 1: eine schematische Darstellung einer beispielhaften Situation in einem Gebäude mit mehreren Stockwerken, mehreren Datenerfassungseinrichtungen und einem Gebäudesystem, das eine Aufzugsanlage und ein Zugangskontrollsystem umfasst;
- Fig. 2: eine schematische Darstellung einer Draufsicht auf eine erste Seite eines beispielhaften Trägerelements für elektronische Komponenten, das in einer Datenerfassungseinrichtung angeordnet ist;
- Fig. 3: eine schematische Darstellung einer Seitenansicht des Trägerelements aus Fig. 2;
- Fig. 4: eine schematische Darstellung einer Draufsicht auf eine zweite Seite des Trägerelements; und
- Fig. 5: ein schematisches Blockschaltbild eines Ausführungsbeispiels einer Datenerfassungseinrichtung.

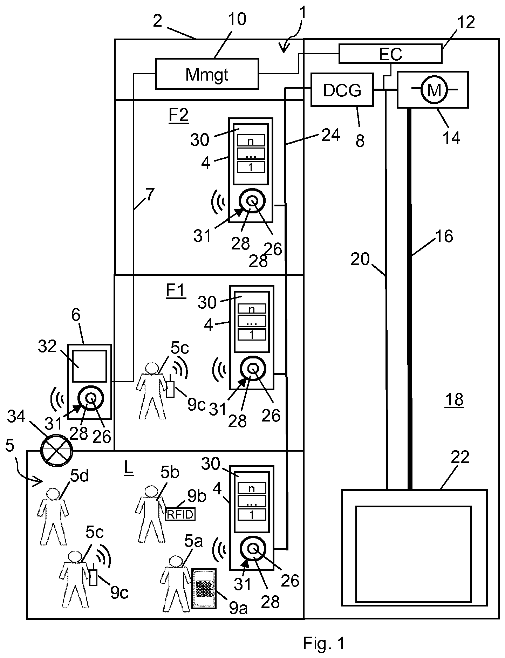

Fig. 1 ist eine schematische Darstellung einer beispielhaften Situation in einem Gebäude

2, das mehrere Stockwerke L, F1, F2 hat, die von einer Aufzugsanlage 1 bedient werden. Auf dem Stockwerk L sind mehrere Nutzer 5a, 5b, 5c, 5d gezeigt, die, wenn es für das Verständnis der hier beschriebenen Technologie keiner Unterscheidung bedarf, als Nutzer 5 bezeichnet sind. Das dargestellte Gebäude 2 ist ausserdem mit einem Zugangskontrollsystem 10 ausgestattet, das beispielsweise den Zugang zum Gebäude 2 an einem Gebäudeeingang 34, den Zugang zur Aufzugsanlage 1 oder zu einer zugangsbeschränkten Zone innerhalb des Gebäudes 2, oder sowohl den Zugang zum Gebäude 2 als auch den Zugang zur Aufzugsanlage 1 oder der zugangsbeschränkten Zone kontrolliert (d. h. einem berechtigten Nutzer 5 wird Zugang gewährt, und einem unberechtigten Nutzer 5 wird der Zugang verwehrt wird). Die Aufzugsanlage 1 und das Zugangskontrollsystem 10 stellen jeweils ein Gebäudesystem dar; die Aufzugsanlage 1 und das Zugangskontrollsystem 10 können auch zu einem (integrierten) Gebäudesystem (1, 10) kombiniert werden, so dass das Gebäudesystem die Funktionalitäten einer Aufzugsanlage und eines Zugangskontrollsystems bietet.

Aus Darstellungsgründen sind in Fig. 1 von der beispielhaften Aufzugsanlage 1 nur eine Aufzugssteuerung 8, 12, die beispielsweise mit einer Zielrufsteuerung ausgestattet ist, eine Antriebsmaschine 14, ein Tragmittel 16 (z. B. Stahlseile oder Flachriemen) und eine am Tragmittel 16 hängende und in einem Schacht 18 verfahrbare Aufzugskabine 22 (im Folgenden auch als Kabine 22 bezeichnet) gezeigt. Der Fachmann erkennt, dass die Aufzugsanlage 1 auch mehrere Kabinen 22 in einem oder mehreren Schächten 18 umfassen kann, die von einer Gruppensteuerung gesteuert werden. Anstelle eines in Fig. 1 dargestellten Traktionsaufzuges kann die Aufzugsanlage 1 auch einen oder mehrere Hydraulikaufzüge oder ein System mit mehreren unabhängig voneinander angetriebenen und verfahrbaren Kabinen aufweisen; diese Kabinen benötigen z. B. keine Tragmittel.

Die Aufzugssteuerung 8, 12 besteht in dem in Fig. 1 gezeigten Ausführungsbeispiel aus zwei Teilsystemen, einem Rufzuteilungssystem 8 und einem Steuerungssystem 12. Das Rufzuteilungssystem 8 umfasst einen Computer, der einen Zielruf (d. h. aus einem auf einem Stockwerk L, F1, F2 eingegebenen Aufzugsruf ergibt sich das Einsteigestockwerk und das Zielstockwerk) gemäss einem Zuteilungsalgorithmus einer Aufzugskabine 22 zuteilt. Derartige Zuteilungsalgorithmen sind dem Fachmann bekannt. Das Rufzuteilungssystem 8 kann auch als Zielruf-Gateway (Destination Call Gateway, DCG) bezeichnet werden. Das Steuerungssystem 12 steuert die Antriebsmaschine 14 u. a. so an, dass die zugeteilte Kabine 22 von einem Einsteigestockwerk auf ein gewünschtes Zielstockwerk oder zu einem gewünschten Zielort auf einem Stockwerk verfahren wird.

Im gezeigten Ausführungsbeispiel ist auf jedem Stockwerk L, F1, F2 mindestens eine Datenerfassungseinrichtung 4 angeordnet, mittels der Nutzer 5 beispielsweise Aufzugsrufe eingeben können. Die Datenerfassungseinrichtungen 4 sind über ein Kommunikationsnetzwerk 24 mit dem Rufzuteilungssystem 8 der Aufzugsanlage 1 verbunden. Mindestens eine weitere Datenerfassungseinrichtung 6 ist in Fig. 1 ausserhalb des Gebäudes 2 angeordnet, an der ein Nutzer 5 beispielsweise einen Berechtigungsnachweis erbringen muss, um Zugang zum Gebäude 2 zu erhalten. Die Datenerfassungseinrichtung 6 ist über ein Kommunikationsnetzwerk 7 mit dem Zugangskontrollsystem 10 verbunden.

Eine oder mehrere der im Gebäude 2 angeordneten Datenerfassungseinrichtungen 4, 6 sind so ausgestaltet, dass sie Information auf verschiedene Art erfassen können. In Fig. 1 ist jede der Datenerfassungseinrichtungen 4, 6 derart ausgestaltet; in einem anderen Ausführungsbeispiel können bei einigen der Datenerfassungseinrichtungen 4, 6 nicht alle Erfassungsarten implementiert, bzw. aktiviert sein. Die Datenerfassungseinrichtungen 4, 6 können zum Beispiel Daten erfassen, die ein Nutzer 5 manuell mittels einer Benutzeroberfläche 30, 32 eingibt. Die Benutzeroberfläche 30, 32 kann dafür eine Tastatur oder einen berührungsempfindlichen Bildschirm umfassen. Alternativ dazu oder zusätzlich haben die Datenerfassungseinrichtungen 4, 6 ein Lesegerät 28, um Daten von einem Informationsträger 9b zu erfassen, wobei das Lesegerät 28 und der Informationsträger 9b für eine Kommunikation gemäss einer bekannten RFID Technologie ausgestaltet sind. Das Lesegerät 28 ist im Folgenden auch als RFID Lesegerät 28 bezeichnet.

Zusätzlich zum RFID Lesegerät 28 haben die Datenerfassungseinrichtungen 4, 6 ein optisches Lesegerät 26, um einen optischen Code (z. B. Strichcode, QR Code oder Farbcode (z. B. beschrieben in WO 2015049186 A1)) von einem Informationsträger zu erfassen. Der Informationsträger kann ein tragbares Kommunikationsgerät 9a (z. B. Mobilfunkgerät/Mobiltelefon, Smartphone, Smartwatch, Tablet PC) sein, das den optischen Code auf einer Anzeigeeinrichtung darstellt, oder ein anderer Träger (z. B. aus Kunststoff und/oder Papier), auf dem der optische Code aufgedruckt ist. Das optische Lesegerät 26 kann zudem dazu ausgestaltet sein, ein biometrisches Merkmal eines Nutzers 5 zu erfassen, beispielsweise einen Fingerabdruck oder ein Irismuster. Verfahren zum Erfassen und Verarbeiten eines optischen Codes oder eines biometrischen Merkmals sind dem Fachmann bekannt.

In einem Ausführungsbeispiel kann als weitere Funktechnologie die Bluetooth Technologie verwendet werden, wobei im Kommunikationsgerät 9a und in den Datenerfassungseinrichtungen 4, 6 entsprechende Funkmodule vorhanden sind. Eine beispielhafte Bluetooth Technologie ist Bluetooth Low Energy (BLE) (Bluetooth 4.0).

Entsprechend diesen genannten Möglichkeiten, die Daten zu erfassen, sind in Fig. 1 verschiedene Kategorien von Nutzern 5a, 5b, 5c, 5d dargestellt. Der Nutzer 5a trägt als Informationsträger beispielsweise das Kommunikationsgerät 9a bei sich, das unter anderem zur Anzeige eines optischen Codes ausgestaltet ist. Der optische Code (bzw. seine Darstellung in elektronischer Form) kann im Kommunikationsgerät 9a beispielsweise permanent gespeichert sein, oder er kann dem Kommunikationsgerät 9a bei Bedarf übermittelt werden. Möchte der Nutzer 5a Zugang zum Gebäude 2 oder einen Aufzug rufen, hält er das Kommunikationsgerät 9a an die Datenerfassungseinrichtung 4, 6, so dass das optische Lesegerät 26 den optischen Code erfassen kann. Der Fachmann erkennt, dass das optische Lesegerät 26 in analoger Weise einen optischen Code erfasst, der auf einem nichtelektronischen Träger aufgebracht ist, beispielsweise wenn der Nutzer 5a anstelle des Kommunikationsgeräts 9a einen solchen Träger an das optische Lesegerät 26 hält.

Der Nutzer 5b trägt einen RFID Informationsträger 9b bei sich. Hält der Nutzer 5b den RFID Informationsträger 9b genügend nah (z. B. weniger als ca. 5 cm) an das RFID Lesegerät 28, entnimmt in einem Ausführungsbeispiel eine im Informationsträger 9b integrierte Antenne aus dem vom RFID Lesegerät 28 erzeugten elektromagnetischen Feld Energie, die der Informationsträger 9b zum Erzeugen und Senden eines Antwortsignals verwendet. Das RFID Lesegerät 28 empfängt das Antwortsignal und erfasst daraus eine dem Informationsträger 9b zugeordnete Information, beispielsweise eine Kennung (Code), die den Informationsträger 9b eindeutig identifiziert.

Der Nutzer 5c trägt ein Kommunikationsgerät 9c bei sich, das ein Funkmodul gemäss einer darin verwendeten Bluetooth Technologie enthält, um mit einem dazu kompatiblen Funkmodul in der Datenerfassungseinrichtung 4, 6 zu kommunizieren. Die Kommunikation erfolgt, wenn sich das Kommunikationsgerät 9c in einem für die verwendete Bluetooth Technologie festgelegten Empfangsbereich (bezogen auf den Standort der Datenerfassungseinrichtung 4, 6) befindet. Die Datenerfassungseinrichtung 4, 6 erfasst bei der Kommunikation beispielsweise eine Kennung des Kommunikationsgeräts 9c.

Der Nutzer 5d trägt keinen der genannten Informationsträger 9a, 9b, 9c bei sich. Dieser Nutzer 5d kann an einer Eingabeeinrichtung einer Datenerfassungseinrichtung 4, 6 auf einer Benutzeroberfläche 30, 32 einen Berechtigungsnachweis (z. B. eine persönliche Identifikationsnummer (PIN)) manuell eingeben. Die Benutzeroberfläche 30, 32 dient beispielsweise dazu, dem Nutzer 5d die Eingabe zu bestätigen und/oder zusätzliche Information mitzuteilen. Die Bestätigung und/oder Information kann in Form eines hörbaren und/oder sichtbaren Signals (z. B. als Text- und/oder Sprachnachricht) erfolgen. Der Fachmann erkennt, dass diese Bestätigungs-/Mitteilungs-Funktionalität der Benutzeroberfläche 30, 32 auch bei einer Verwendung der Informationsträger 9a, 9b und 9c genutzt werden kann.

Die von der Datenerfassungseinrichtung 4, 6 erfassten Daten (z. B. optischer Code, Kennung, PIN) werden von entsprechenden Auswerteeinrichtungen der Aufzugsanlage 1 und/oder des Zugangskontrollsystems 10 ausgewertet. Können die erfassten Daten nach ihrer Auswertung einem Nutzer zugeordnet und somit identifiziert werden. Kann der Nutzer identifiziert werden, gilt er als berechtigt, das Gebäude 2 und/oder bestimmte Bereiche oder Einrichtungen im Gebäude 2 zu nutzen. Einem nicht identifizierbaren Nutzer bleibt diese Nutzung verwehrt. Für einen berechtigten Nutzer 5 kann z. B. der Zugang 34 entriegelt werden, die Datenerfassungseinrichtung 4 zur Eingabe eines Aufzugsrufs freigegeben werden oder ein (automatischer) Aufzugsruf auf ein festgelegtes Zielstockwerk veranlasst werden.

In einem Ausführungsbeispiel kann für jeden Nutzer 5, der berechtigt ist, das Gebäude 2 zu betreten und/oder die Aufzugsanlage 1 zu benutzen, in einer Datenbank ein Profil angelegt sein, das z. B. Personendaten (z. B. Name, Firma, evtl. körperliche Einschränkung, Identifikationsdaten eines mobilen Gerätes (z. B. Kennung, ID Code (Media-Access-Control (MAC) Adresse)), Identifikationsdaten eines Mitarbeiterausweises (Badge) mit RFID Technologie oder optischem Code (z. B. QR- oder Barcode)) und/oder personenspezifische Zugangs- und/oder Nutzungsberechtigungen (z. B. Zugang 24/7 oder nur an Werktagen zwischen 7:00 Uhr und 18:00 Uhr) enthält. Die Datenbank, implementiert in einem Datenspeicher, kann Teil der Aufzugsanlage 1, des Zugangskontrollsystems 10, eines Gebäudemanagementsystems oder einem anderen System (z. B. einem räumlich entfernten Datenspeichersystem) sein. Ist die Datenbank ein Teil des Gebäudemanagementsystems oder des räumlich entfernten Datenspeichersystems hat das Zugangskontrollsystem 10 oder die Steuereinrichtung 8, 12 des Aufzugsystems 1 Zugriff auf die Datenbank, um so z. B. Nutzungs- und Zugangsberechtigungen zu überprüfen. Die Datenbank kann beispielsweise durch einen Gebäudeverwalter oder einen anderen Dienstleister verwaltet werden.

Die Nutzer 5a, 5b, 5c, 5d können beispielsweise Personen sein, die im Gebäude 2 wohnen oder arbeiten. Diese Nutzer 5 sind mit dem Gebäude 2 und der Nutzung der Gebäudesysteme 1, 10 vertraut; sie können als Informationsträger ihr Kommunikationsgerät 9a oder die ihnen zugeteilten RFID Informationsträger 9b verwenden. Die Nutzer 5 können auch Besucher sein, die sich erstmalig oder nicht regelmässig im Gebäude 2 aufhalten. Solchen Besuchern kann beispielsweise ein Besucherausweis, der auf der RFID Technologie beruht oder auf den ein optischer Code aufgedruckt ist, ausgehändigt werden. Alternativ dazu kann einem Besucher vorgängig ein optischer Code übermittelt werden, beispielsweise mittels einer E-Mail oder einer Textnachricht; der optische Code kann dann beispielsweise vor Ort auf einem mobilen Kommunikationsgerät des Besuchers angezeigt werden.

In der in Fig. 1 gezeigten Situation in Verbindung mit den genannten verschiedenen Kategorien von Nutzern 5 ist die hier beschriebene Technologie in vorteilhafter Weise anwendbar. Kurz und beispielhaft zusammengefasst ist eine Datenerfassungseinrichtung 4, 6 so ausgestaltet, dass zum Zweck der Datenerfassung der RFID Informationsträger 9b und der Informationsträger (Kommunikationsgerät 9a), auf dem ein optischer Code dargestellt ist, an der gleichen Stelle der Datenerfassungseinrichtung 4, 6 vorzuweisen sind: Ein Nutzer 5b kann z. B. den RFID Informationsträger 9b an die Datenerfassungseinrichtung 4, 6 halten, der RFID Informationsträger 9b kann dabei die Datenerfassungseinrichtung berühren oder von ihr beabstandet sein, ein anderer Nutzer 5a kann anschliessend das Kommunikationsgerät 9a ebenfalls an die gleiche Stelle halten. Diese Stelle kann an einem Gehäuse 36 der Datenerfassungseinrichtung 4, 6 durch eine Kennzeichnung sichtbar gemacht werden, beispielsweise mittels einer sichtbaren und/oder fühlbaren (Braille) Markierung und/oder einem Lichteffekt. In Fig. 1 erfolgt die Kennzeichnung durch ein Markierungselement 31, es kann, wie zur Illustration dargestellt, auf einer Gehäusevorderseite kreisförmig sichtbar sein; davon abweichende Formen und Arten zur Kennzeichnungen sind ebenfalls möglich. Dadurch wird die Bedienung der Datenerfassungseinrichtung 4, 6 hinsichtlich der verschiedenen Informationsträger vereinheitlicht und somit auch vereinfacht, insbesondere für Nutzer 5, die mit dem Gebäude 2 nicht vertraut sind.

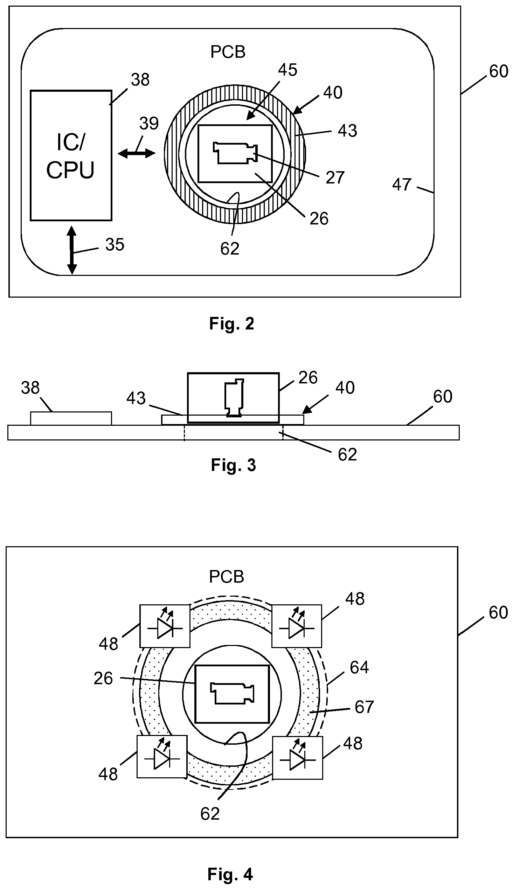

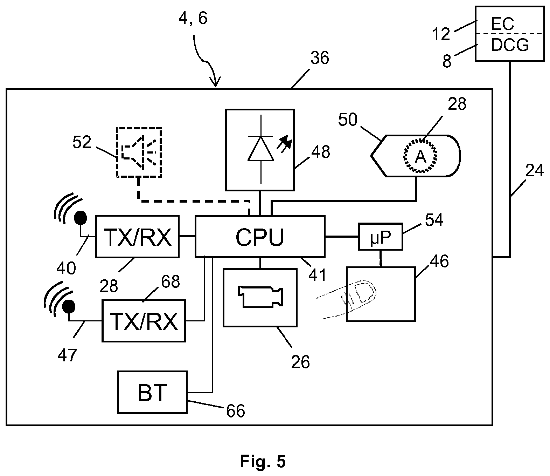

Die genannte Vereinheitlichung der Datenerfassungseinrichtung 4, 6, d. h. der RFID Informationsträger 9b und der Informationsträger mit einem optischen Code (Kommunikationsgerät 9a) sind an die gleiche Stelle der Datenerfassungseinrichtung 4, 6 zu halten, ergibt sich gemäss der hier beschriebenen Technologie aus der Anordnung des optischen Lesegeräts 26 und des RFID Lesegeräts 28. Details dieser Anordnung sind in Fig. 2, Fig. 3 und Fig. 4 beispielhaft dargestellt: Fig. 2 zeigt eine schematische Darstellung einer Draufsicht auf eine erste Seite eines beispielhaften Trägerelements 60 für elektronische Komponenten, Fig. 3 zeigt eine schematische Darstellung einer Seitenansicht des Trägerelements 60 und Fig. 4 zeigt eine schematische Darstellung einer Draufsicht auf eine zweite Seite des Trägerelements 60. Das Trägerelement 60 ist beispielsweise eine Leiterplatte (PCB), die in einem Gehäuse 36 (Fig. 5) der Datenerfassungseinrichtung 4, 6 angeordnet ist. Das Trägerelement 60 ist im Folgenden auch als Leiterplatte 60 bezeichnet.

Auf der Leiterplatte 60 ist eine Vielzahl von elektronischen Komponenten (z. B. diskrete Bauteile, integrierte Schaltungen (IC), Prozessoren (CPU), Steckverbinder, Sockel für steckbare/entnehmbare Bauteile bzw. Komponenten) angeordnet und durch ein Netz von Leiterbahnen miteinander verbunden. Der Fachmann erkennt, dass die Komponenten auf einer und/oder beiden Seiten der Leiterplatte 60 angeordnet sein können; einige der Komponenten können auch auf getrennten Leiterplatten angeordnet sein, die übereinander angeordnet werden können, z. B. auf einer Ebene parallel zur Ebene der Leiterplatte 60. In Fig. 2 und Fig. 3 sind die elektronischen Komponenten aus Darstellungsgründen zu einem Komponentenmodul 38 (IC/CPU) zusammengefasst.

Auf der Leiterplatte 60 sind das optische Lesegerät 26 und eine Antenne 40 des RFID Lesegeräts 28 angeordnet, die mittels einer Verbindung 39 mit dem Komponentenmodul 38 elektrisch verbunden sind. Das Komponentenmodul 38 umfasst in einem Ausführungsbeispiel die Bauteile, ICs und Prozessoren, die mit dem optischen Lesegerät 26 und der Antenne 40 kommunikativ verbunden sind. Die Leiterplatte 60 hat einen Durchbruch 62, der eine Passage zwischen einer ersten Seite der Leiterplatte 60 und einer zweiten Seite der Leiterplatte 60 schafft. Der Durchbruch 62 ist in der gezeigten Ausführung kreisförmig, z. B. rund mit einem vorbestimmten Durchmesser (z. B. durch eine Bohrung hergestellt); er kann in einer anderen Ausführung eine davon abweichende Form haben, z. B. im Wesentlichen die Form eines Rechtecks oder eines Vielecks, oder andere regelmässige oder unregelmässige Formen. In Fig. 2 - Fig. 4 ist der Durchbruch 62 ungefähr um den Kreuzungspunkt der Diagonalen der rechteckförmigen Leiterplatte 60 vorgesehen; der Fachmann erkennt, dass der Durchbruch auch an einer anderen Stelle der Leiterplatte 60 vorgesehen sein kann.

Das optische Lesegerät 26 und die Antenne 40 sind bezogen auf den Durchbruch 62 auf der Leiterplatte 60 angeordnet, und zwar so, dass Licht im Wesentlichen ungestört durch die Antenne 40 und andere Komponenten auf der Leiterplatte 60 aus Richtung der Gehäusevorderseite auf das optische Lesegerät 26 fallen kann. Im in Fig. 2 gezeigten Ausführungsbeispiel hat die Antenne 40 - entsprechend der Form des Durchbruchs 62 - einen kreisförmigen Querschnitt (d. h. in einer Ebene senkrecht zu einer Längsachse der Antenne 40), wobei die Antenne 40 den Durchbruch 62 im Wesentlichen umrandet.

Die Antenne 40 umfasst eine Luftspule 43. Windungen der Luftspule 43 formen einen Innenraum 45 der Luftspule 43. Ein innerer Durchmesser der Luftspule 43 ist so gewählt, dass sie nicht in den Durchbruch 62 hineinragt. Wie in Fig. 2 angedeutet, umrandet die Antenne 40 bzw. die Luftspule 43 im Wesentlichen den Durchbruch 62. Der innere Durchmesser der Luftspule 43 ist zum Beispiel gleich dem Durchmesser des Durchbruchs 62, er kann jedoch auch grösser gewählt werden. In einem Ausführungsbeispiel beträgt der Durchmesser des Durchbruchs 62 zwischen 10 mm und 20 mm.

Fig. 2 zeigt ausserdem eine zweite Antenne 47, die mit einem in Fig. 5 gezeigten zweiten Lesegerät 68 verbunden ist. Das zweite Lesegerät 68 ist in Fig. 2 im Komponentenmodul 38 enthalten, das durch eine elektrische Verbindung 35 mit der zweiten Antenne 47 verbunden ist. Im gezeigten Ausführungsbeispiel umfasst die zweite Antenne 47 mindestens eine schleifenförmige Windung, die sich auf einer Seite der Leiterplatte 60 im Wesentlichen entlang deren Umfangs erstreckt. Die mindestens eine Windung ist in die Leiterplatte 60 integriert, beispielsweise als Leiterbahn (evtl. abgedeckt durch eine Isolierschicht) auf einer Oberfläche der Leiterplatte 60.

Das erste (RFID) Lesegerät 28 ist in Verbindung mit der ersten Antenne 40 beispielsweise für eine Funkkommunikation in einem Frequenzbereich von ca. 100 kHz - 200 kHz, insbesondere für eine Frequenz von ca. 125 kHz oder ca. 134 kHz ausgestaltet. Das zweite Lesegerät 68 ist in Verbindung mit der zweiten Antenne 47 für eine Funkkommunikation in einem Frequenzbereich von ca. 10 MHz - 20 MHz, insbesondere für eine Frequenz von ca. 13,56 MHz ausgestaltet. Das zweite Lesegerät 68 ist auch ein RFID Lesegerät, sein Frequenzbereich unterscheidet sich jedoch von dem des ersten Lesegeräts 28. Der Fachmann erkennt, dass die im Gebäudesystem 1, 10 benutzten Informationsträger 9b zu diesen Lesegeräten 28, 68 kompatibel sind, d. h. für eine Funkkommunikation mit dem ersten Lesegerät 28 sendet und empfängt der Informationsträger 9b auf einer Frequenz von ca. 125 kHz oder ca. 134 kHz, und für eine Funkkommunikation mit dem zweiten Lesegerät 28 sendet und empfängt ein Informationsträger auf einer Frequenz von ca. 13,56 MHz. Derartige Informationsträger 9b sind auf dem Gebiet der RFID Technologie auch als Transponder, (wegen ihrer Karten ähnlichen Form) Transponder-Karten oder (wegen einem eingebetteten Chip) Smart Transponder bekannt.

Transponder für die Verwendung im niedrigeren Frequenzbereich von ca. 100 kHz - ca. 200 kHz haben eine Reichweite von einigen Zentimeter, z. B. ≤ ca. 2 cm. Transponder für die Verwendung bei einer höheren Frequenz von ca. 13,56 MHz haben eine Reichweite von ca. 10 cm. Diese Funkkommunikation ist auch als Nahfeldkommunikation (near field communcation, NFC) bekannt und z. B. genormt durch ISO 14443 und 18092.

In Fig. 3 ist schematisch angedeutet, dass sich das optische Lesegerät 26 im Innenraum 45 der Luftspule 43 erstreckt. Je nach Höhe der Luftspule 43 und Länge des optischen Lesegeräts 26 erstreckt sich das optische Lesegerät ganz oder teilweise im Innenraum 45 der Luftspule 43. Das optische Lesegerät 26 kann auch mehr oder weniger weit in den Durchbruch 62 hineinragen; es kann auch darüber hinausragen. Der Fachmann erkennt, dass auf der Leiterplatte 60 beispielsweise ein Sockel für das optische Lesegerät 26 vorhanden sein kann, um das optische Lesegerät 26 an einer gewünschten Position bezogen auf die Luftspule 43 zu fixieren. Der Sockel kann so gestaltet sein, dass das optische Lesegerät 26 daraus bei Bedarf entnehmbar ist.

Das optische Lesegerät 26 umfasst in einem Ausführungsbeispiel eine Digitalkamera, die einen Bildsensor 27 umfasst. Der Bildsensor 27 kann Teil eines als Objektiv bezeichneten Teils der Digitalkamera sein. Eine solche Digitalkamera kann mit oder ohne Sockel auf dem Trägerelement 60 angeordnet werden. Derartige Digitalkameras sind beispielsweise aus der Verwendung in Smartphones und Tablet PCs bekannt. Die Auswertung eines vom Bildsensor 27 erzeugten elektronischen Digitalsignals (z. B. entsprechend dem erfassten optischen Code), das in einem für die Digitalkamera festgelegten Format (z. B. dem jpg/jpeg-Format) vorliegt, kann in der Digitalkamera oder einer anderen Verarbeitungseinheit (z. B. Komponentenmodul 38) der Datenerfassungseinrichtung 4, 6 erfolgen.

Der Bildsensor 27, oder die Digitalkamera, ist so angeordnet, dass er Licht aus Richtung einer Vorderseite des Gehäuses 36 empfangen kann, die für einen Nutzer 5 zugänglich ist. Abhängig davon, wie der Bildsensor 27 bezogen auf den Durchbruch 62 angeordnet ist, d. h. wie weit er in den Durchbruch 62 und/oder die Luftspule 43 hineinragt, fällt Licht durch die Antenne 40 (bzw. deren Luftspule 43) und den Durchbruch 62 hindurch auf das Bildsensor 27

In Fig. 4 ist das optische Lesegerät 26, bzw. dessen Bildsensor 27, durch den Durchbruch 62 hindurch sichtbar, während die Antenne 40 durch die Leiterplatte 60 verdeckt und daher in dieser Darstellung nicht sichtbar ist. Fig. 4 zeigt ausserdem eine Lichtquelle 48, die zur Markierung und/oder zur Erzeugung eines Lichteffekts vorgesehen ist. Der Lichteffekt ist für den Nutzer 5 am Gehäuse 36 sichtbar und kennzeichnet die Stelle, an die ein Informationsträger 9a, 9b zu halten ist. In einem Ausführungsbeispiel ist der Lichteffekt durch das Markierungselement 31 für den Nutzer 5 sichtbar, sie kann das Markierungselement 31 beispielsweise vom Gehäuseinneren aus beleuchten, so dass sich der markierte Bereich vom übrigen Teil der Vorderseite unterscheidet, beispielsweise kann er heller oder dunkler oder mit Licht einer anderen Farbe (einschliesslich weissem Licht) beleuchtet werden.

In einem Ausführungsbeispiel umfasst die Lichtquelle 48 eine oder mehrere Leuchtdioden (LED); in Fig. 4 sind vier Leuchtdioden (48) eingezeichnet, die im Wesentlichen gleichmässig verteilt entlang einer Kreislinie 64 angeordnet sind. Zusätzlich kann ein optisches Streuelement 67 (Diffusor) angeordnet sein, in den die Leuchtdioden das von ihnen emittierte Licht einspeisen oder in den die Leuchtdioden integriert sind, um Licht in gewünschter Weise zu verteilen. In einem Ausführungsbeispiel ist das Streuelement 67 eine ringförmige Scheibe, die den Durchbruch 62 frei lässt.

Die Lichtquelle 48 wird durch eine auf der Leiterplatte 60 angeordnete Steuereinrichtung angesteuert, in Fig. 2 ist sie im Komponentenmodul 38 enthalten. Die Steuereinrichtung kann die Lichtquelle 48 so ansteuern, dass sich ein gewünschter Lichteffekt ergibt, beispielsweise wird konstantes weisses Licht oder Licht einer gewünschten Farbe emittiert; der Lichteffekt kann auch zeitlich variieren (z. B. die Helligkeit nimmt gemäss einem festgelegten Muster ab und zu) oder abhängig vom Betriebszustand der Datenerfassungseinrichtung 4, 6 oder dem Gebäudesystem 1, 10 sein (rotes Licht kann z. B. einen Betriebsfehler anzeigen und grünes Licht einen ordnungsgemässen Betrieb).

Fig. 5 zeigt ein schematisches Blockschaltbild eines Ausführungsbeispiels einer Datenerfassungseinrichtung 4, die über das Leitungsnetz 24 mit der Aufzugssteuerung 8, 12 verbunden ist. Die Datenerfassungseinrichtung 6 des Zugangskontrollsystems 10 ist analog dazu ausgestaltet. Im Gehäuse 36 der Datenerfassungseinrichtung 4 sind die Lichtquelle 48, eine Anzeigeeinrichtung 50, eine Eingabeeinrichtung 46 für manuelle Eingaben, das RFID Lesegerät 28 (TX/RX) mit der Antenne 40, das zweite Lesegerät 68 mit der Antenne 47, ein Funkmodul 66 für eine bekannte Bluetooth Technologie und das optische Lesegerät 26, die mit einer ebenfalls im Gehäuse 54 angeordneten Steuereinrichtung 41 verbunden sind. Je nach Ausgestaltung der Datenerfassungseinrichtung 4 kann sie einen elektroakustischen Wandler 52 (z. B. einen Lautsprecher oder Summer) umfassen, der mit der Steuereinrichtung 41 verbunden ist; als optionale Komponente ist der elektroakustische Wandler 52 gestrichelt gezeigt. Der elektroakustische Wandler 52 kann beispielsweise zur Ausgabe einer Sprachmitteilung oder eines hörbaren Signaltons dienen, um beispielsweise dem Nutzer 5 einen Aufzugsruf akustisch zu bestätigen.

Im gezeigten Ausführungsbeispiel umfasst die Steuereinrichtung eine zentrale Recheneinheit 41 (CPU) und einen oder mehrere Prozessoren, die als getrennte Komponenten gezeigt sind. Ein Prozessor 54 ist mit der zentralen Recheneinheit 41 und der Eingabeeinrichtung 46 verbunden. Der Prozessor 54 detektiert beispielsweise ein Signal, das von der Eingabeeinrichtung 46 erzeugt wird, wenn der Nutzer 5 an ihr einen Berechtigungsnachweis und/oder einen Aufzugsruf eingibt. Der Fachmann erkennt, dass die zentrale Recheneinheit 41 und der Prozessor 54, bzw. deren Funktionen, in einer Steuereinrichtung zusammengefasst sein können; dementsprechend kann die Funktion des Prozessors 54 durch die zentrale Recheneinheit 41 wahrgenommen werden, und in Fig. 5 kann die Darstellung des Prozessors 54 entfallen.

Gesteuert von der zentralen Recheneinheit 41 zeigt die Anzeigeeinrichtung 50 je nach Situation einen Stockwerkindikator oder einen Aufzugsindikator (evtl. in Verbindung mit einem Richtungsindikator) an. In Fig. 5 zeigt die Anzeigeeinrichtung 50 zur Illustration den Aufzug bzw. dessen Kabine ("A") an, der den Aufzugsruf bedient.

Die Eingabeeinrichtung 46 umfasst in einem Ausführungsbeispiel einen Touchscreen. Die Funktionsweise und Struktur eines Touchscreens sind dem Fachmann allgemein bekannt. In einem Ausführungsbeispiel erzeugen die Eingabeeinrichtung 46 und die Anzeigeeinrichtung 50 die Benutzeroberfläche 30, 32, die im Gehäuse 36 so angeordnet ist, dass sie für einen Nutzer 5 zugänglich ist. Bei Verwendung eines Touchscreens sind die Eingabeeinrichtung 46 und die Anzeigeeinrichtung 50 zusammengefasst und deren getrennte Darstellung kann in Fig. 5 entfallen.

Die Lichtquelle 48 dient z. B. dazu, die Stelle, an die die Informationsträger 9a, 9b zu halten sind, zu kennzeichnen. Zusätzlich zur Lichtquelle 48 kann eine Beleuchtungseinrichtung vorhanden sein, die die Benutzeroberfläche 30, 32 der Datenerfassungseinrichtung 4 ganz oder teilweise beleuchtet. Gesteuert von der zentralen Recheneinheit 41 kann die Beleuchtungseinrichtung die Anzeigeeinrichtungen 50, bzw. deren Benutzeroberfläche 30, mit weissem Licht beleuchten, damit die angezeigten Indikatoren von einem Nutzer 5 wahrnehmbar sind, insbesondere bei schlechten Lichtverhältnissen. Die Beleuchtungseinrichtung kann die Benutzeroberfläche 30, 32 auch mit farbigem Licht beleuchten, um dem Nutzer 5 die Eingabe eines Aufzugsrufs zu bestätigen.

Zusätzlich zum RFID Lesegerät 28 kann die Datenerfassungseinrichtung 4 in einem anderen Ausführungsbeispiel mit einer Sende- und Empfangseinrichtung (Funktransceiver) zum Senden und Empfangen von Funksignalen ausgestaltet sein. Der Funktransceiver kommuniziert mit einem tragbaren Kommunikationsgerät 9c eines Nutzers 5, wenn es sich in Funkreichweite zum Funktransceiver der Datenerfassungseinrichtung 4 befindet, d. h. ein vom Kommunikationsgerät 9c ausgesendetes Funksignal hat am Ort des Funktransceivers eine Signalstärke (beispielsweise ausgedrückt durch einen RSSI-Wert (Received Signal Strength Indicator)), die grösser als ein für einen sicheren Empfang festgelegter Schwellenwert ist. Die Kommunikation erfolgt beispielsweise über ein Nahfeld-Funknetz wie z. B. ein Bluetooth-Funknetz, oder ein WLAN/WiFi-Funknetz. Bluetooth ist ein Standard gemäss IEEE 802.15.1, und WLAN/WiFi ist ein Standard gemäss IEEE 802.11; Funknetze gemäss diesen Standards dienen der kabellosen Vernetzung von Geräten über eine kurze Distanz von ca. einigen Metern.

In einem Ausführungsbeispiel sind der Funktransceiver und das Kommunikationsgerät 9c ausgestaltet, um gemäss dem Bluetooth Standard miteinander zu kommunizieren. Ist das Kommunikationsgerät 9c beispielsweise ein Smartphone kann darauf eine anwendungsspezifische Software (auch als "App" bekannt) installiert sein, die mittels einer Benutzeroberfläche die Bedienung der Aufzugsanlage 1 ermöglicht. Ein Beispiel einer für diese Anwendung geeigneten App ist die myPORT App der Schindler Gruppe. Ein Nutzer 5 kann mit Hilfe der Benutzeroberfläche beispielsweise ein gewünschtes Zielstockwerk auswählen. Das Smartphone kommuniziert das ausgewählte Zielstockwerk zum Funktransceiver der Datenerfassungseinrichtung 4, die die entsprechende Information zur Aufzugssteuerung 8, 12 weiterleitet. Hat die Aufzugssteuerung 8, 12 eine Kabine 22 zur Bedienung dieses Fahrtwunsches ausgewählt, wird ein dieser Kabine 22 entsprechender Indikator auf dem Smartphone des Nutzers 5 angezeigt.

Das Gehäuse 36 kann auf verschiedene Art und Weise gestaltet sein, um z. B. spezielle Anforderungen an das Design der Datenerfassungseinrichtung 4 zu erfüllen. In einem Ausführungsbeispiel hat das Gehäuse 36 eine im Wesentlichen ebene Vorderseite. In einem Ausführungsbeispiel ist das Gehäuse 36 im Wesentlichen keilförmig, wobei zwei abgewinkelte Flächen die Gehäusevorderseite bilden; rückseitig kann die Fläche eben, gekrümmt oder abgewinkelt sein. Je nach gewünschten Design können die Flächen der Vorderseite die gleichen Abmessungen oder unterschiedliche Abmessungen haben, z. B. unterschiedliche Längen bei gleicher Breite. Unabhängig von der gewählten Form des Gehäuses 36 ist einem Teil der Gehäusevorderseite die Benutzeroberfläche 30, 32 zugeordnet; einem anderen Teil sind die Lesegeräte 26, 28 zugeordnet. Die Lesegeräte 26, 28 können beispielsweise in einem unteren Teil angeordnet sein; entsprechend dazu ist in diesem Teil das Markierungselement 31 angeordnet. Zumindest der markierte Bereich kann ein für das zu detektierende Licht transparentes Material (z. B. Glas oder Kunststoff) oder einen materiefreien Durchbruch (z. B. ein Loch) aufweisen.

## Patentansprüche

1. Datenerfassungseinrichtung (4, 6) für ein Gebäudesystem (1, 10) umfassend:
ein Gehäuse (36), das auf einem Stockwerk (L, F1, F2) eines Gebäudes (2) oder an einem Zugang (34) zu einem zugangsbeschränkten Bereich anordenbar ist, wobei das Gebäude (2) das Gebäudesystem (1, 10) umfasst;
eine im Gehäuse (36) angeordnete Anzeigeeinrichtung (50);
ein im Gehäuse (36) angeordnetes optisches Lesegerät (26), das ausgestaltet ist, um Information von einem ersten Informationsträger (9a) optisch zu erfassen, wobei das optische Lesegerät (26) so angeordnet ist, dass durch einen Bildsensor (27) des optischen Lesegeräts (26) Licht aus Richtung einer Vorderseite des Gehäuses (36) empfangbar ist, die für einen Nutzer (5) zugänglich ist;
ein im Gehäuse (36) angeordnetes erstes Lesegerät (28), das eine erste Antenne (40) hat, um Information von einem zweiten Informationsträger (9b) mittels Funkkommunikation zu erfassen, wobei die erste Antenne (40) eine Luftspule (43) umfasst, die einen Innenraum (45) aufweist; und
eine im Gehäuse (36) angeordnete Steuereinrichtung (38, 41), die mit der Anzeigeeinrichtung (50), dem optischen Lesegerät (26) und dem ersten Lesegerät (28) kommunikativ verbunden ist,
wobei der Bildsensor (27) des optischen Lesegeräts (26) ganz oder teilweise im Innenraum (45) der Luftspule (43) angeordnet ist.

2. Datenerfassungseinrichtung (4, 6) nach Anspruch 1, ausserdem umfassend ein Markierungselement (31), das an der Vorderseite des Gehäuses (36) für einen Nutzer (5) sichtbar vorhanden ist, wobei das Markierungselement (31) einen Bereich markiert, in dem die Luftspule (43) und der in ihrem Innenraum (45) angeordnete Bildsensor (27) angeordnet sind.

3. Datenerfassungseinrichtung (4, 6) nach Anspruch 2, bei der die Vorderseite des Gehäuses (36) im durch das Markierungselement (31) markierten Bereich für vom Bildsensor (27) zu detektierendes Licht durchlässig ist.

4. Datenerfassungseinrichtung (4, 6) nach einem der Ansprüche 2-3, ausserdem aufweisend eine im Gehäuse (36) angeordnete Lichtquelle (48), durch die das Markierungselement (31) beleuchtbar ist.

5. Datenerfassungseinrichtung (4, 6) nach Anspruch 4, bei der das Markierungselement (31) die Lichtquelle (48) umfasst.

6. Datenerfassungseinrichtung (4, 6) nach Anspruch 4 oder 5, bei dem die Lichtquelle (48) in einem Diffusor integriert ist oder Licht in diesen einspeist.

7. Datenerfassungseinrichtung (4, 6) nach einem der Ansprüche 1-6, bei der das erste Lesegerät (28) und die Antenne (40) für eine Funkkommunikation in einem ersten Frequenzbereich von ca. 100 kHz - 200 kHz, insbesondere für eine Frequenz von ca. 125 kHz oder ca. 134 kHz, ausgestaltet sind.

8. Datenerfassungseinrichtung (4, 6) nach einem der Ansprüche 1-6, ausserdem aufweisend ein Trägerelement (60), auf dem das optische Lesegerät (26) und das erste Lesegerät (28) angeordnet sind,
- wobei das Trägerelement (60) einen Durchbruch (62) hat, durch den eine Passage zwischen einer ersten Seite und einer zweiten Seite des Trägerelements (60) geschaffen ist, und
- wobei die Luftspule (43) den Durchbruch (62) umrandet.

9. Datenerfassungseinrichtung (4, 6) nach Anspruch 8, ausserdem umfassend ein zweites Lesegerät (38) und eine zweite Antenne (47), die für eine Funkkommunikation in einem zweiten Frequenzbereich von ca. 4 MHz - ca. 20 MHz, insbesondere für eine Frequenz von ca. 13,56 MHz, ausgestaltet sind, wobei die zweite Antenne (47) in das Trägerelement (60) integriert ist.

10. Datenerfassungseinrichtung (4, 6) nach einem der Ansprüche 1-9, ausserdem umfassend einen Funktransceiver (66) für eine Kommunikation mit einer Kommunikationseinrichtung (9c) eines Nutzers (5c), wobei der Funktransceiver (66) mit der Steuereinrichtung (41) verbunden ist.

11. Datenerfassungseinrichtung (4, 6) nach einem der Ansprüche 1-10, ausserdem umfassend eine Eingabeeinrichtung (46) mit einer Tastatur oder einer berührungsempfindlichen Oberfläche zur manuellen Eingabe von Daten.

12. Datenerfassungseinrichtung (4, 6) nach einem der Ansprüche 1-11, bei der das optische Lesegerät (26) eine Digitalkamera umfasst, wobei die Digitalkamera den Bildsensor (27) umfasst.

13. Gebäudesystem (1, 10) in einem Gebäude (2) mit mindestens einer Datenerfassungseinrichtung (4, 6) gemäss einem der Ansprüche 1-12.

14. Gebäudesystem (1, 10) nach Anspruch 13, bei dem die mindestens eine Datenerfassungseinrichtung (4, 6) zur Erfassung eines Aufzugsrufs auf einem Stockwerk (L, F1, F2) des Gebäudes (2) angeordnet ist.

15. Gebäudesystem (1, 10) nach einem der Ansprüche 13-14, bei dem die mindestens eine Datenerfassungseinrichtung (4, 6) zur Erfassung eines Berechtigungsnachweises an einem Zugang (34) zu einem zugangsbeschränkten Bereich angeordnet ist.

## Claims

1. Data capture device (4, 6) for a building system (1, 10) comprising:
a housing (36) that can be arranged on a floor (L, F1, F2) of a building (2) or at an entrance (34) to a restricted-access region, the building (2) comprising the building system (1, 10);
a display device (50) arranged in the housing (36);
an optical reading device (26) arranged in the housing (36) and embodied to optically detect information from a first information carrier (9a), wherein the optical reading device (26) is arranged such that through an image sensor (27) of the optical reading device (26) light can be received from the direction of a front side of the housing (36) that is accessible to a user (5);
a first reading device (28) arranged in the housing (36) and having a first antenna (40) in order to detect information from a second information carrier (9b) by means of radio communication, the first antenna (40) comprising an air coil (43) that has an inner space (45); and,
a control device (38, 41) arranged in the housing (36) and communicatively connected to the display device (50), the optical reading device (26), and the first reading device (28);
wherein the image sensor (27) of the optical reading device (26) is arranged entirely or partially in the inner space (45) of the air coil (43).

2. Data capture device (4, 6) according to claim 1, further comprising a marking element (31) that on the front side of the housing (36) is visible to a user (5), the marking element (31) marking a region in which the air coil (43) and the image sensor (27) arranged in its inner space (45) are arranged.

3. Data capture device (4, 6) according to claim 2, in which the front side of the housing (36) in the region marked by the marking element (31) is transparent to light to be detected by the image sensor (27).

4. Data capture device (4, 6) according to one of claims 2-3, also having a light source (48) arranged in the housing (36) and by means of which the marking element (31) can be illuminated.

5. Data capture device (4, 6) according to claim 4, in which the marking element (31) comprises the light source (48).

6. Data capture device (4, 6) according to claim 4 or 5, in which the light source (48) is integrated in a diffuser or feeds light into same.

7. Data capture device (4, 6) according to one of claims 1-6, in which the first reading device (28) and the antenna (40) are embodied for radio communication in a first frequency range of approx. 100 kHz - 200 kHz, in particular for a frequency of approx.. 125 kHz or approximately 134 kHz.

8. Data capture device (4, 6) according to one of claims 1-6, also having a carrier element (60) on which the optical reading device (26) and the first reading device (28) are arranged,
- wherein the carrier element (60) has an opening (62) through which a passage between a first side and a second side of the carrier element (60) is created, and,
- wherein the air coil (43) surrounds the opening (62).

9. Data capture device (4, 6) according to claim 8, further comprising a second reading device (38) and a second antenna (47) which are embodied for radio communication in a second frequency range of approx. 4 MHz - approx. 20 MHz, in particular for a frequency of 13.56 MHz, the second antenna (47) being integrated into the carrier element (60).

10. Data capture device (4, 6) according to any of claims 1-9, further comprising a radio transceiver (66) for communication with a communication device (9c) of a user (5c), wherein the radio transceiver (66) is connected to the control device (41).

11. Data capture device (4, 6) according to one of claims 1-10, also comprising an input device (46) with a keyboard or a touch-sensitive surface for manually inputting data.

12. Data capture device (4, 6) according to one of claims 1-11, in which the optical reading device (26) comprises a digital camera, the digital camera comprising the image sensor (27).

13. Building system (1, 10) in a building (2) with at least one data capture device (4, 6) according to one of claims 1-12.

14. Building system (1, 10) according to claim 13, in which the at least one data capture device (4, 6) for detecting an elevator call is arranged on a floor (L, F1, F2) of the building (2).

15. Building system (1, 10) according to one of claims 13-14, in which the at least one data capture device (4, 6) for acquiring proof of authorization is arranged at an entrance (34) to a restricted-access region.

## Revendications

1. Dispositif d'acquisition de données (4, 6) pour un système de bâtiment (1, 10) comprenant :
un boîtier (36) pouvant être disposé sur un étage (L, F1, F2) d'un bâtiment (2) ou au niveau d'un accès (34) à une zone d'accès restreint, le bâtiment (2) comprenant le système de bâtiment (1, 10) ;
un dispositif d'affichage (50) disposé dans le boîtier (36) ;
un lecteur optique (26) disposé dans le boîtier (36), qui est conçu pour détecter optiquement des informations provenant d'un premier support d'informations (9a), le lecteur optique (26) étant disposé de telle sorte que de la lumière, venant d'une face avant du boîtier (36), qui est accessible à un utilisateur (5), peut être reçue par un capteur d'images (27) du lecteur optique (26) ;
un premier lecteur (28) disposé dans le boîtier (36) et présentant une première antenne (40), destiné à détecter des informations provenant d'un second support d'informations (9b) par radiocommunication, la première antenne (40) comprenant une bobine à air (43) présentant un espace intérieur (45) ; et
un dispositif de commande (38, 41) disposé dans le boîtier (36), qui est relié en communication au dispositif d'affichage (50), au lecteur optique (26) et au premier lecteur (28),
le capteur d'image (27) du lecteur optique (26) étant disposé totalement ou partiellement dans l'espace intérieur (45) de la bobine à air (43).

2. Dispositif d'acquisition de données (4, 6) selon la revendication 1, comprenant en outre un élément de marquage (31) qui est présent sur la face avant du boîtier (36) de manière visible pour un utilisateur (5), l'élément de marquage (31) marquant une zone dans laquelle la bobine à air (43) et le capteur d'images (27) disposé dans son espace intérieur (45) sont disposés.

3. Dispositif d'acquisition de données (4, 6) selon la revendication 2, dans lequel la face avant du boîtier (36) est transparente à la lumière à détecter par le capteur d'images (27) dans la zone marquée par l'élément de marquage (31).

4. Dispositif d'acquisition de données (4, 6) selon l'une des revendications 2 à 3, présentant en outre une source de lumière (48) disposée dans le boîtier (36) et permettant d'éclairer l'élément de marquage (31).

5. Dispositif d'acquisition de données (4, 6) selon la revendication 4, dans lequel l'élément de marquage (31) comprend la source de lumière (48).

6. Dispositif d'acquisition de données (4, 6) selon la revendication 4 ou 5, dans lequel la source de lumière (48) est intégrée dans un diffuseur ou alimente celui-ci en lumière.

7. Dispositif d'acquisition de données (4, 6) selon l'une des revendications 1 à 6, dans lequel le premier lecteur (28) et l'antenne (40) sont conçus pour une radiocommunication dans une première plage de fréquences d'environ 100 kHz - 200 kHz, en particulier pour une fréquence d'environ 125 kHz ou environ 134 kHz.

8. Dispositif d'acquisition de données (4, 6) selon l'une des revendications 1 à 6, présentant en outre un élément support (60) sur lequel sont disposés le lecteur optique (26) et le premier lecteur (28),
- l'élément support (60) ayant une ouverture (62) à travers laquelle un passage est créé entre un premier côté et un second côté de l'élément support (60) et
- la bobine à air (43) bordant l'ouverture (62).

9. Dispositif d'acquisition de données (4, 6) selon la revendication 8, comprenant en outre un second lecteur (38) et une seconde antenne (47), qui sont conçus pour une radiocommunication dans une seconde plage de fréquences d'environ 4 MHz - environ 20 MHz, en particulier pour une fréquence d'environ 13,56 MHz, la seconde antenne (47) étant intégrée dans l'élément support (60).

10. Dispositif d'acquisition de données (4, 6) selon l'une des revendications 1 à 9, comprenant en outre un émetteur-récepteur radio (66) pour une communication avec un dispositif de communication (9c) d'un utilisateur (5c), l'émetteur-récepteur radio (66) étant connecté au dispositif de commande (41).

11. Dispositif d'acquisition de données (4, 6) selon l'une des revendications 1 à 10, comprenant en outre un dispositif de saisie (46) comportant un clavier ou une surface tactile pour la saisie manuelle de données.

12. Dispositif d'acquisition de données (4, 6) selon l'une des revendications 1 à 11, dans lequel le lecteur optique (26) comprend un appareil photo numérique, l'appareil photo numérique comprenant le capteur d'images (27).

13. Système de bâtiment (1, 10) dans un bâtiment (2) comportant au moins un dispositif d'acquisition de données (4, 6) selon l'une des revendications 1 à 12.

14. Système de bâtiment (1, 10) selon la revendication 13, dans lequel l'au moins un dispositif d'acquisition de données (4, 6) pour la détection d'un appel d'ascenseur est disposé au niveau d'un étage (L, F1, F2) du bâtiment (2).

15. Système de bâtiment (1, 10) selon l'une des revendications 13 à 14, dans lequel l'au moins un dispositif d'acquisition de données (4, 6) pour la détection d'informations d'identification est disposé au niveau d'un accès (34) à une zone d'accès restreint.
